# EUROPÄISCHE PATENTSCHRIFT

(11) **EP 3 383 721 B1**
(45) Veröffentlichungstag und Bekanntmachung des Hinweises auf die Patenterteilung: **22.07.2020**
(21) Anmeldenummer: 17700811.7
(22) Anmeldetag: 16.01.2017
(51) Int. Cl.: B61D 17/02

(54) **FAHRZEUG**
VEHICLE
VÉHICULE

(30) Priorität: 18.02.2016 DE 102016202492
(43) Veröffentlichungstag der Anmeldung: 10.10.2018
(73) Patentinhaber: Siemens Mobility GmbH, 81739 München (DE)
(72) Erfinder: SCHIEFER, Benno, 40233 Düsseldorf (DE); WEISS, Thomas, 80636 München (DE)
(86) Internationale Anmeldenummer: PCT/EP2017/050791
(87) Internationale Veröffentlichungsnummer: WO 2017/140447

(56) Entgegenhaltungen:
- EP-A1- 2 246 233
- EP-A1- 2 851 257
- EP-B1- 2 383 161
- WO-A1-02/064412
- DE-A1- 10 109 831
- DE-A1-102007 039 315
- DE-A1-102008 030 609
- FR-A1- 2 333 685

## Beschreibung

Die Erfindung bezieht sich auf ein Fahrzeug, insbesondere Schienenfahrzeug, mit einem mittleren Rumpfabschnitt und einem sich daran anschließenden, im Fahrzeugbetrieb ein freies Fahrzeugende bildenden Fahrzeugkopf.

Aus der europäischen Patentschrift EP 2 383 161 B1 ist ein Schienenfahrzeug mit einem Fahrzeugkopf bekannt, bei dem die Seitenwindempfindlichkeit durch den Einsatz einer Strömungsabrisseinrichtung reduziert wird.

Zudem ist aus der deutschen Offenlegungsschrift DE 101 09 831 A1 ein Fahrzeugkopf an einem Wagenkasten, insbesondere für ein Hochgeschwindigkeits-Schienenfahrzeug, bekannt, bei dem zur Verbesserung der aerodynamischen Eigenschaften vorgesehen ist, dass sich der Querschnitt zu einer Spitze des Fahrzeugkopfes hin im Wesentlichen verjüngt. Die dort vorgestellte Ausführungsform für einen Fahrzeugkopf geht nicht näher auf Seitenwindstabilität des Fahrzeuges ein.

Der Erfindung liegt die Aufgabe zugrunde, ein Schienenfahrzeug anzugeben, das bei hohen Fahrtgeschwindigkeiten auch im Falle von Seitenwind stabile Fahreigenschaften aufweist und besonders kippsicher ist.

Diese Aufgabe wird erfindungsgemäß durch ein Schienenfahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, der Fahrzeugkopf einen haubenartig überstehenden Dachbereich aufweist, der einen darunter liegenden, nach innen in Richtung Fahrzeugmitte gewölbten Seitenwandbereich des Fahrzeugkopfs überwölbt, der haubenartig überstehende Dachbereich und der darunter liegende, nach innen gewölbte Seitenwandbereich durch eine Kante getrennt sind, an der die Außenfläche des überstehenden Dachbereichs und ein oberer Flächenabschnitt des nach innen gewölbten Seitenwandbereichs winklig aufeinander stehen, und die Kante - in Fahrzeuglängsrichtung gesehen - ganz oder zumindest abschnittsweise für Seitenwind, insbesondere für Seitenwind mit einer Windanströmrichtung zwischen 10° bis 30° zur Fahrtrichtung, eine Strömungsabrisskante auf der Leeseite bildet.

Ein wesentlicher Vorteil des erfindungsgemäßen Fahrzeugs ist darin zu sehen, dass - im Falle von Seitenwind - der haubenartig überstehende Dachbereich auf der Leeseite des Fahrzeugs einen Strömungsabriss hervorrufen kann, durch den die Seitenwindempfindlichkeit und die Kippgefahr des Fahrzeugs deutlich reduziert werden kann.

Es ist vorgesehen, dass der haubenartig überstehende Dachbereich und der darunter liegende, nach innen gewölbte Seitenwandbereich durch eine Kante getrennt sind, an der die Außenfläche des überstehenden Dachbereichs und ein oberer Flächenabschnitt des nach innen gewölbten Seitenwandbereichs winklig aufeinander stehen. Unter dem Begriff Kante wird hier im fertigungstechnischen Sinne eine Biege- oder allgemein eine Umform- oder Formkante (bzw. die Zusammenführung zweier Flächen) verstanden, bei der der Krümmungsradius kleiner als 30 mm ist.

Die Kante bildet - in Fahrzeuglängsrichtung gesehen - ganz oder zumindest abschnittsweise für Seitenwind, insbesondere für Seitenwind mit einer Windanströmrichtung zwischen 10° bis 30° zur Fahrtrichtung, eine Strömungsabrisskante auf der Leeseite.

Der Winkel zwischen der Außenfläche des überstehenden Dachbereichs und dem oberen Flächenabschnitt des nach innen gewölbten Seitenwandbereichs liegt vorzugsweise zwischen 70 und 110 Grad, bevorzugt zwischen 80 und 100 Grad.

Vorzugsweise bildet die Kante - in Fahrzeuglängsrichtung gesehen - zumindest abschnittsweise den am weitesten außen liegenden Seitenwandbereich.

Besonders bevorzugt bilden die Außenfläche des überstehenden Dachbereichs und der obere Flächenabschnitt des nach innen gewölbten Seitenwandbereichs einen nach außen ausgerichteten Keil. Der Keil kann horizontal nach außen ausgerichtet sein und keinen Hinterschnitt bilden oder nach unten geneigt sein und einen Hinterschnitt bilden.

Der Winkel zwischen der oberen Keilfläche des Keils und der Vertikalen beträgt vorzugsweise zwischen 30 und 60 Grad, bevorzugt zwischen 40 und 50 Grad.

Der Winkel zwischen der unteren Keilfläche des Keils und der Vertikalen beträgt vorzugsweise zwischen 30 und 60 Grad, bevorzugt zwischen 40 und 50 Grad.

Die Keilmitte bzw. Keillängsachse bzw. die Winkelhalbierende des Keils ist im Falle einer hinterschnittsfreien Keilsausgestaltung vorzugsweise in einem Winkel zwischen ± 20 Grad zur Horizontalen ausgerichtet. Im Falle einer Hinterschnittbildung durch den Keil ist die Keilmitte bzw. Keillängsachse vorzugsweise in einem Winkel von 45 Grad ± 10 Grad zur Vertikalen ausgerichtet.

Der obere Flächenabschnitt des nach innen gewölbten Seitenwandbereichs grenzt oben vorzugsweise scharfkantig an den überstehenden Dachbereich und unten vorzugsweise krümmungsstetig an eine Taille an, die den am tiefsten innenliegenden Abschnitt des nach innen gewölbten Seitenwandbereichs bildet. Unter einer "scharfkantigen" Kante wird im fertigungstechnischen Sinne eine Biege- oder allgemein eine Umform- oder Formkante verstanden, bei der der Krümmungsradius kleiner als 20 mm ist.

Der obere Flächenabschnitt ist bevorzugt in einem Winkel zwischen 30 und 60 Grad, bevorzugt zwischen 40 und 50 Grad, zur Vertikalen angeordnet.

Der nach innen gewölbte Seitenwandbereich weist vorzugsweise einen unteren Flächenabschnitt auf, der an einen unteren, konvexen Seitenwandbereich angrenzt. Der Übergang zwischen dem nach innen gewölbten Seitenwandbereich und dem unteren, konvexen Seitenwandbereich ist bevorzugt krümmungsstetig.

Der untere, konvexe Seitenwandbereich steht - in Fahrzeuglängsrichtung gesehen - bevorzugt bereichsweise weiter nach außen heraus als die Kante bzw. die Keilspitze und bereichsweise weniger weit nach außen heraus als die Kante bzw. die Keilspitze.

Die Kante bzw. die Keilspitze und der untere, konvexe Seitenwandbereich sind vorzugsweise - in vertikaler Richtung gesehen - durch die Taille getrennt.

In Fahrzeuglängsrichtung und in Richtung des mittleren Rumpfabschnitts gesehen nehmen der Überstand des haubenartig überstehenden Dachbereichs und die Tiefe des darunter liegenden, nach innen gewölbten Seitenwandbereichs bzw. die Taillentiefe bevorzugt ab.

In Fahrzeuglängsrichtung und in Richtung der Bugspitze gesehen nehmen der Überstand des haubenartig überstehenden Dachbereichs und die Tiefe des darunter liegenden, nach innen gewölbten Seitenwandbereichs bzw. die Taillentiefe vorzugsweise zunächst zu und danach wieder ab. Der Rumpfabschnitt und die Bugspitze sind bevorzugt überstands- und taillenfrei.

Bei einer besonders bevorzugten Ausgestaltung ist vorgesehen, dass
- die auf die Streckenoberfläche, insbesondere Schienenoberkante im Falle eines Schienenfahrzeugs, bezogene Höhe des Fahrzeugkopfs in Richtung Bugspitze abnimmt,
- die auf die Streckenoberfläche, insbesondere Schienenoberkante, bezogene Höhe des haubenartig überstehenden Dachbereichs in Richtung Bugspitze abnimmt und
- die Ausprägung, insbesondere das seitliche Herausstehen, des haubenartig überstehenden Dachbereichs in Richtung Bugspitze zunimmt und vorzugsweise dann wieder abnimmt.

Bei der letztgenannten Ausgestaltung wird - in vorteilhafter Weise - der aerodynamische Einfluss des überstehenden Dachbereichs hinsichtlich Seitenwind in Richtung Bugspitze und damit auch vertikal nach unten verlagert, so dass eine durch Seitenwind auf das Schienenfahrzeug ausgeübte Krafteinwirkung vornehmlich im vorderen Bugabschnitt und damit gleichzeitig auch weit unten, also bodennah bzw. schienennah, auftritt. Das vertikale Absenken des haubenartig überstehenden Dachbereichs (bzw. der Strömungsabrisskante) in Richtung Bugspitze führt in Verbindung mit dem Anheben der Ausprägung des haubenartig überstehenden Dachbereichs (bzw. der Strömungsabrisskante) in Richtung Bugspitze in vorteilhafter Weise also dazu, dass ein durch Seitenwind auf das Schienenfahrzeug ausgeübtes Kippmoment überwiegend im vorderen Bugabschnitt und damit relativ weit unten auftreten wird. Aufgrund des dort nur geringen Abstands von der Fahrbahn bzw. Schienenoberkante ist die Hebellänge der Krafteinwirkung dort vergleichsweise klein -verglichen mit Krafteinwirkungen, die höher angreifen und deshalb einen längeren Hebelarm aufweisen-; durch den vergleichsweise kurzen Hebelarm der Krafteinwirkung ist die Kippgefahr bei Seitenwind in vorteilhafter Weise deutlich reduziert.

Wie bereits erwähnt, wird der haubenartig überstehende Dachbereich - entlang der Fahrzeuglängsrichtung und in Richtung Bugspitze gesehen - vorzugsweise ausgeprägter. Besonders vorteilhaft ist es, wenn - ausgehend vom mittleren Rumpfabschnitt des Fahrzeugs in Richtung Bugspitze - der untere, konvexe Seitenwandbereich zunächst weiter nach außen heraussteht als die Kante bzw. die Keilspitze und wenn - im weiteren Verlauf nach vorn in Richtung Bugspitze, also in einem vorderen Bugabschnitt - die Kante bzw. die Keilspitze den unteren, konvexen Seitenwandbereich nach außen - in Fahrzeugquerrichtung - überragt.

Unmittelbar vor der Bugspitze nimmt die Ausprägung des haubenartig überstehende Dachbereich bzw. des Keiles vorzugsweise wieder stetig ab, und der Seitenwandbereich geht vorzugsweise flächenbündig in eine keilfreie Bugnasenspitze, also eine Bugnasenspitze ohne haubenartig überstehenden Dachbereich, über.

Darüber hinaus ist es vorteilhaft, wenn die auf die Streckenoberfläche, insbesondere Schienenoberkante im Falle eines Schienenfahrzeugs, bezogene Höhe des Fahrzeugkopfs (Abstand zwischen Dach und Streckenoberfläche) in Richtung Bugspitze kleiner wird und der vordere Bugabschnitt, in dem die Kante bzw. die Keilspitze den unteren, konvexen Seitenwandbereich nach außen in Fahrzeugquerrichtung überragt, in einem Bereich liegt, in dem die Höhe des Fahrzeugkopfs zwischen 20 % und 70 %, insbesondere zwischen 30 % und 60 %, der durch die Höhe im mittleren Rumpfabschnitt gebildeten Referenzhöhe beträgt.

Auch kann - wie eingangs bereits erwähnt - vorgesehen sein, dass von der Seite betrachtet der haubenartig überstehende Dachbereich einen Hinterschnitt bildet und - in horizontaler Richtung bzw. Fahrzeugquerrichtung von der Seite betrachtet - einen dahinter innenliegenden Seitenwandabschnitt verdeckt.

Bei der letztgenannten Variante ist es vorteilhaft, wenn die Außenfläche des überstehenden Dachbereichs und der obere Flächenabschnitt des nach innen gewölbten Seitenwandbereichs einen Keil bilden, der sich nach außen sowie schräg nach unten erstreckt.

Vorzugsweise weist das Schienenfahrzeug ein sich an den mittleren Rumpfabschnitt anschließendes Fahrzeugheck auf, dessen Formgebung mit der Formgebung des Fahrzeugkopfes identisch ist.

Die Erfindung wird nachfolgend anhand von Ausführungsbeispielen näher erläutert; dabei zeigen beispielhaft
- Figur 1: ein Ausführungsbeispiel für ein erfindungsgemäßes Schienenfahrzeug in einer dreidimensionalen Sicht schräg von der Seite,
- Figur 2: den Fahrzeugkopf des Schienenfahrzeugs gemäß Figur 1 in einer seitlichen Sicht näher im Detail,
- Figur 3: Querschnittskonturlinien des Fahrzeugkopfes des Schienenfahrzeugs gemäß Figur 1 in einer dreidimensionalen Darstellung,
- Figur 4: die Konturlinien gemäß Figur 3 nebeneinander,
- Figur 5: eine der Konturlinien gemäß Figur 4 näher im Detail,
- Figur 6: das Schienenfahrzeug gemäß Figur 1 in einer Sicht von der Seite,
- Fig. 7-8: weitere dreidimensionale Darstellungen des Fahrzeugkopfes des Schienenfahrzeugs gemäß Figur 1 und
- Figur 9: ein Ausführungsbeispiel für eine Fahrzeugkopfausgestaltung, bei der ein haubenartig überstehender Dachbereich einen Hinterschnitt bildet.

In den Figuren werden der Übersicht halber für identische oder vergleichbare Komponenten stets dieselben Bezugszeichen verwendet.

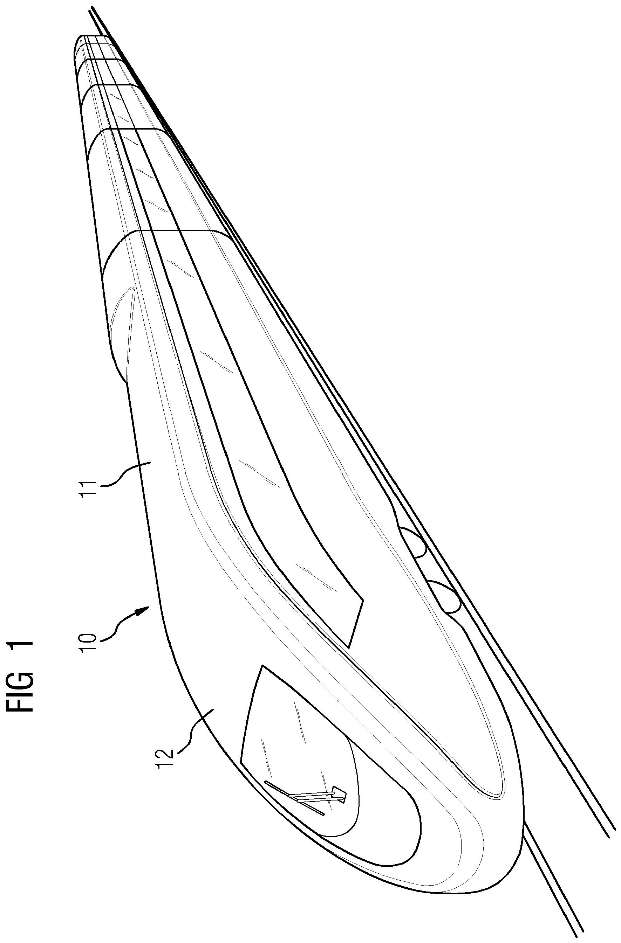

Die Figur 1 zeigt ein Ausführungsbeispiel für ein Schienenfahrzeug 10 in einer dreidimensionalen Sicht schräg von der Seite. Man erkennt einen mittleren Rumpfabschnitt 11, an den sich ein Fahrzeugkopf 12 anschließt. Der Fahrzeugkopf 12 bildet im Fahrzeugbetrieb ein freies Fahrzeugende des Schienenfahrzeugs 10.

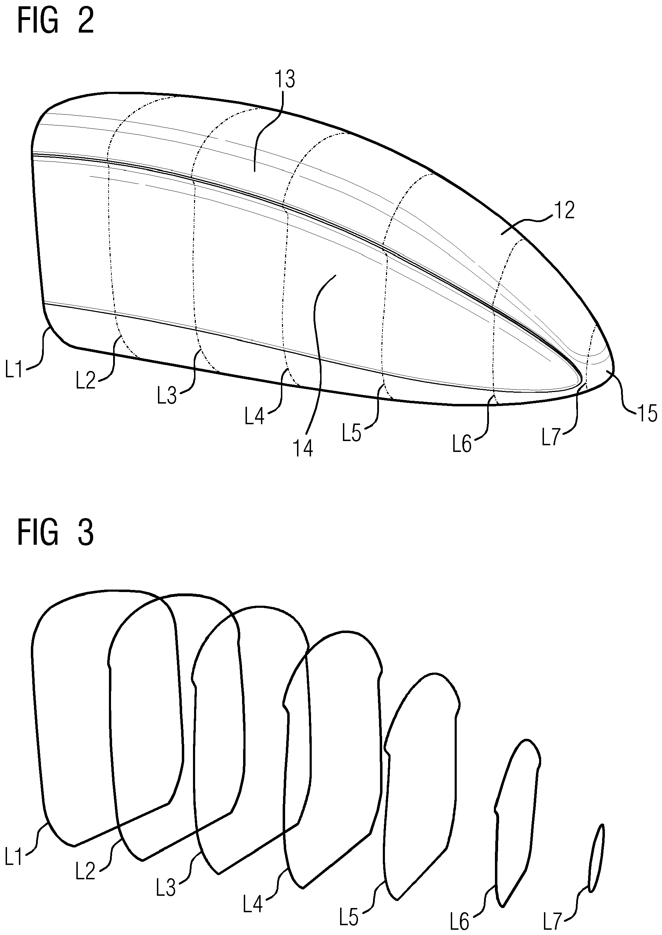

Die Figur 2 zeigt den Fahrzeugkopf 12 des Schienenfahrzeugs 10 gemäß Figur 1 in einer dreidimensionalen Sicht schräg von der Seite näher im Detail. Es lässt sich ein haubenartig überstehender Dachbereich 13 erkennen, der einen darunter liegenden, nach innen in Richtung Fahrzeugmitte gewölbten Seitenwandbereich 14 des Fahrzeugkopfes 12 überwölbt.

Bei dem Ausführungsbeispiel gemäß Figur 2 ist die Bugspitze 15 des Fahrzeugkopfes 12 ohne haubenartig überstehenden Bereich 13 ausgeführt; mit anderen Worten ist die Bugspitze 15 überstandsfrei.

In der Figur 2 sind mit Querschnittskonturlinien L1 bis L7 Querschnitte des Schienenfahrzeugs näher markiert, auf die weiter unten näher im Detail eingegangen wird. Die Figur 3 zeigt die Querschnittskonturlinien L1 bis L7 nochmals in einer anderen Darstellung.

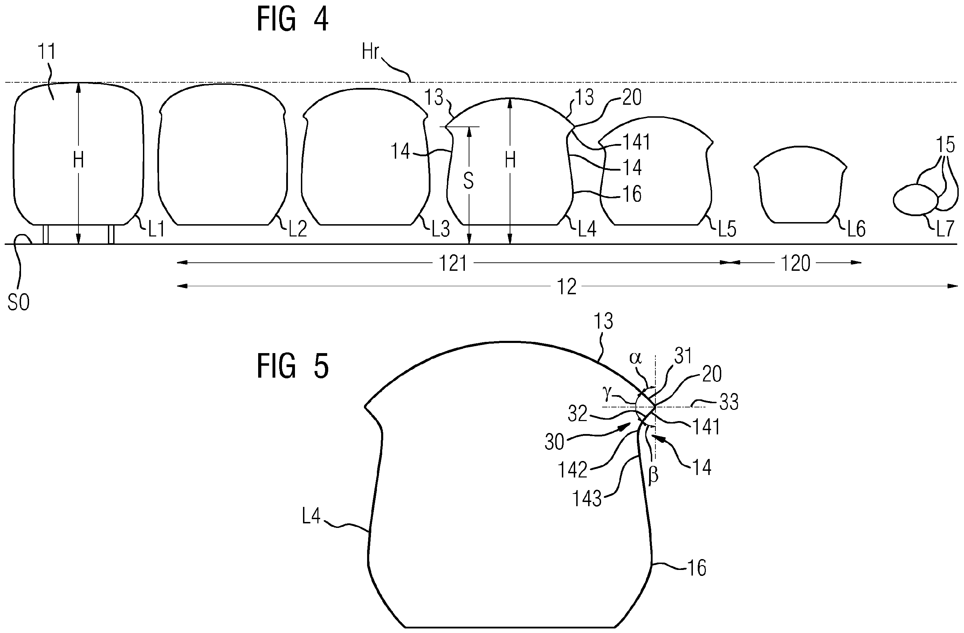

In der Figur 4 sind die Querschnittskonturlinien L1 bis L7 nebeneinander dargestellt. Es lässt sich erkennen, dass der haubenartig überstehende Dachbereich 13 und der darunter liegende, nach innen gewölbte Seitenwandbereich 14 durch eine Strömungsabrisskante 20 getrennt sind, an der die Außenfläche des überstehenden Dachbereichs 13 und ein oberer Flächenabschnitt 141 des nach innen gewölbten Seitenwandbereichs 14 winklig aufeinanderstehen. Der Winkel γ (vgl. Figur 5) zwischen der Außenfläche des überstehenden Dachbereichs 13 und dem oberen Flächenabschnitt 141 beträgt bei dem Ausführungsbeispiel ca. 90 Grad.

Der überstehende Dachbereich 13 und der obere Flächenabschnitt 141 werden vorzugsweise durch einen technisch umgeformten Abschnitt (z.B. gebogenes Blech oder als Faserverbundkonstruktion etc.) gebildet. Das "winklige Aufeinanderstehen" von Dachbereich 13 und oberem Flächenabschnitt 141 sowie die Ausbildung der Strömungsabrisskante 20 wird vorzugsweise durch eine Umformkante mit einem Krümmungsradius unter 30 mm erreicht. Mit anderen Worten wird die Strömungsabrisskante 20 vorzugsweise durch eine Umformkante mit einem Krümmungsradius von maximal 30 mm gebildet.

Aufgrund ihrer Formgestaltung bildet die Strömungsabrisskante 20 - in Fahrzeuglängsrichtung gesehen - ganz oder zumindest abschnittsweise für Seitenwind mit einer Windanströmrichtung zwischen 10° bis 30° zur Fahrtrichtung einen Strömungsabriss auf der Leeseite des Schienenfahrzeugs 10.

Die Figur 5 zeigt die Querschnittskonturlinie L4 gemäß den Figuren 2 bis 4 näher im Detail. Es lässt sich erkennen, dass die Außenfläche des überstehenden Dachbereichs 13 und der obere Flächenabschnitt 141 des nach innen gewölbten Seitenwandbereichs 14 einen nach außen ausgerichteten Keil 30 bilden. Der Winkel α zwischen der oberen Keilfläche 31, die durch den überstehenden Dachbereich 13 gebildet wird, und der Vertikalen beträgt ca. 45°. Der Winkel β zwischen der unteren Keilfläche 32 des Keils 30, die durch den oberen Flächenabschnitt 141 des nach innen gewölbten Seitenwandbereichs 14 gebildet wird, und der Vertikalen beträgt vorzugsweise ebenfalls ca. 45°.

Bei der Ausführungsvariante gemäß Figur 5 ist die Keilmitte 33 bzw. die Keillängsachse bzw. Winkelhalbierende des Keils 30 horizontal oder zumindest näherungsweise horizontal ausgerichtet. Der Öffnungswinkel γ des Keils beträgt vorzugsweise 90 Grad ± 10 Grad.

Der obere Flächenabschnitt 141 des nach innen gewölbten Seitenwandbereichs 14 grenzt an den überstehenden Dachbereich 13 zwecks Bildung der Strömungsabrisskante 20 vorzugsweise scharfkantig an. Unter einem scharfkantigen Angrenzen wird - wie bereits erwähnt - im Falle einer Umformkante ein Krümmungsradius von maximal 20 mm verstanden.

Unten grenzt der obere Flächenabschnitt 141 krümmungsstetig an eine Taille 142 des nach innen gewölbten Seitenwandbereichs 14 an. Die Taille 142 bildet den am tiefsten innen liegenden Abschnitt des nach innen gewölbten Seitenwandbereichs 14.

Unterhalb der Taille 142 schließt sich an diese ein unterer Flächenabschnitt 143 des nach innen gewölbten Seitenwandbereichs 14 an, an den wiederum ein unterer, konvexer Seitenwandbereich 16 des Fahrzeugkopfes 12 angrenzt. Der Übergang zwischen dem nach innen gewölbten Seitenwandbereich 14 und dem unteren, konvexen Seitenwandbereich 16 ist vorzugsweise krümmungsstetig.

Die Strömungsabrisskante 20 bzw. der Keil 30 und der untere konvexe Seitenwandbereich 16 sind also durch die Taille 142 des nach innen gewölbten Seitenwandbereichs 14 voneinander getrennt.

Wieder bezugnehmend auf Figur 4 lässt sich erkennen, dass der untere, konvexe Seitenwandbereich - in Fahrzeuglängsrichtung gesehen - bereichsweise weiter nach außen heraussteht als die Strömungsabrisskante 20 bzw. die Keilspitze des Keils 30 und bereichsweise weniger weiter heraussteht als die Strömungsabrisskante 20 bzw. die Keilspitze des Keils 30. So zeigt die Figur 4, dass die Strömungsabrisskante 20 bzw. der Keil 30 im Bereich des vorderen Bugabschnitts 120 des Fahrzeugkopfes 12 weiter heraussteht als der konvexe Seitenwandbereich 16 und im Bereich des dahinter liegenden hinteren Kopfabschnitts 121 des Fahrzeugkopfes 12 weniger weit heraussteht.

Darüber hinaus lässt sich in der Figur 4 erkennen, dass die auf die Schienenoberkante SO bezogenen Höhe H des Fahrzeugkopfes 12 in Richtung der Bugspitze 15 abnimmt. Damit einhergehend wird auch die auf die Schienenoberkante SO bezogene Höhe S des haubenartig überstehenden Dachbereichs 13 bzw. die Höhe S der Strömungsabrisskante 20 in Richtung der Bugspitze 15 kleiner; mit anderen Worten wird die Strömungsabrisskante 20 in Richtung der Bugspitze 15 abgesenkt.

Darüber hinaus zeigt die Figur 4, dass die Ausprägung, also das seitliche Herausstehen, des haubenartig überstehenden Dachbereichs 13 bzw. der Strömungsabrisskante 20 in Richtung der Bugspitze 15 - einhergehend mit dem Absenken nach unten - stärker wird. Das Absenken der Strömungsabrisskante 20 in Richtung Bugspitze 15 führt in Verbindung mit dem Anheben der Ausprägung der Strömungsabrisskante 20 in Richtung Bugspitze 15 in vorteilhafter Weise dazu, dass eine durch Seitenwind auf das Schienenfahrzeug 10 ausgeübte Krafteineinwirkung vornehmlich im vorderen Bugabschnitt 120 und damit relativ weit unten auftreten wird. Aufgrund des dort nur geringen Abstands von der Schienenoberkante SO ist die Hebellänge der Krafteineinwirkung dort vergleichsweise klein -verglichen mit Krafteineinwirkungen, die höher angreifen und deshalb einen längeren Hebelarm aufweisen-; durch den vergleichsweise kurzen Hebelarm der Krafteineinwirkung ist die Kippgefahr bei Seitenwind in vorteilhafter Weise deutlich reduziert.

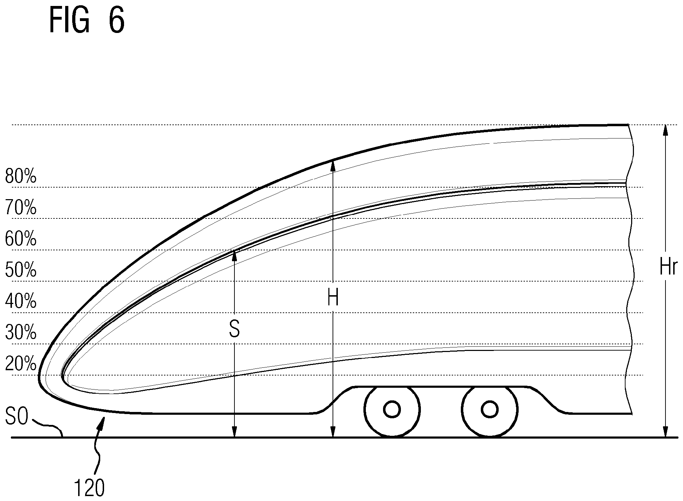

Die Figur 6 zeigt das Schienenfahrzeug 10 gemäß Figur 1 nochmals in einer Sicht von der Seite. Es lässt sich erkennen, dass die auf die Schienenoberkante SO bezogene Höhe H des Fahrzeugkopfes 12 in Richtung der Bugspitze 15 kleiner wird. Im vorderen Bugabschnitt 120 liegt die auf die Schienenoberkante SO bezogene Höhe S der Strömungsabrisskante 20 bzw. des Keils 30 (vgl. Figuren 4 und 5) vorzugsweise in einem Bereich zwischen 30 % und 60 % der durch die Höhe im mittleren Rumpfabschnitt 11 gebildeten Referenzhöhe Hr.

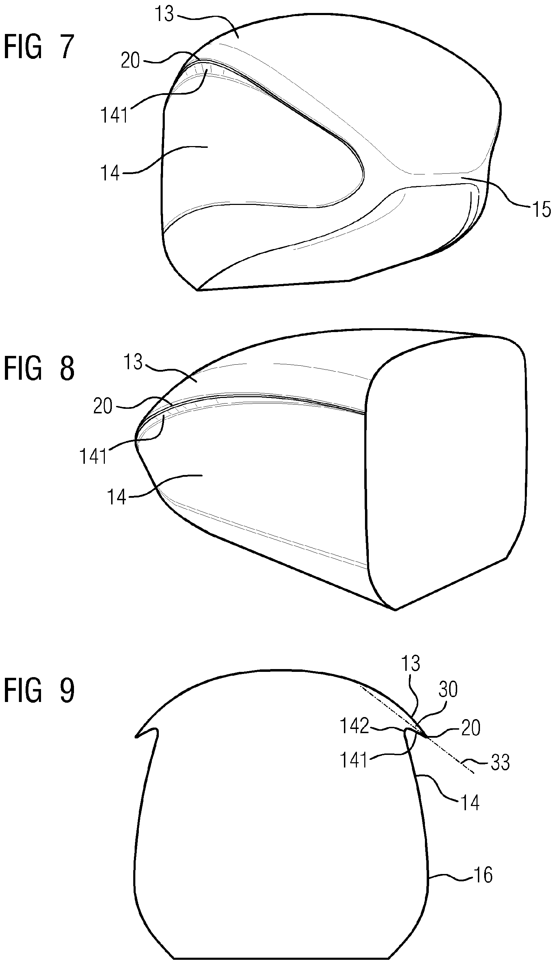

Die Figuren 7 und 8 zeigen den Fahrzeugkopf 12 des Schienenfahrzeugs 10 gemäß Figur 1 nochmals in weiteren dreidimensionalen Sichten, und zwar schräg von vorn und in Richtung der Bugspitze 15 gesehen.

Die Figur 9 zeigt für den überstehenden Dachbereich 13 bzw. die Strömungsabrisskante 20 eine alternative Ausgestaltung.

Es lässt sich erkennen, dass der durch den überstehenden Dachbereich 13 und den darunter befindlichen oberen Flächenabschnitt 141 gebildete Keil 30 schräg nach unten ausgerichtet ist und die Keilmitte 33 bzw. die Keillängsachse des Keils 30 einen Winkel von ca. 45° zur Horizontalen aufweist. Die Ausgestaltung und Ausrichtung des Keils 30 bzw. des überstehenden Dachbereichs 13 bewirken, dass dieser einen Hinterschnitt bildet und - in horizontaler Richtung bzw. Fahrzeugquerrichtung von der Seite betrachtet - einen dahinter liegenden Seitenwandabschnitt, und zwar den oberen Flächenabschnitt 141 des nach innen gewölbten Seitenwandbereichs 14, verdeckt.

Die in der Figur 9 gezeigte Ausgestaltung der Strömungsabrisskante 20 kann bei dem Schienenfahrzeug 10 gemäß Figur 1 durchgängig eingesetzt werden. Auch ist es möglich, die Strömungsabrisskante 20 in Fahrzeuglängsrichtung abschnittsweise ohne Hinterschnitt (wie in den Figuren 1 bis 8 gezeigt) und abschnittsweise mit Hinterschnitt (wie in Figur 9 gezeigt) auszuführen.

Im Übrigen gelten die obigen Erläuterungen im Zusammenhang mit den Figuren 1 bis 8 hinsichtlich der Wirkung der Strömungsabrisskante 20 entsprechend.

Im Zusammenhang mit den Figuren 1 bis 9 wurden Ausführungsbeispiele für die Ausgestaltung des Fahrzeugkopfes 12 und des mittleren Rumpfabschnitts 11 näher erläutert. Ergänzend sei erwähnt, dass das Schienenfahrzeug 10 ein sich an den mittleren Rumpfabschnitt 11 anschließendes Fahrzeugheck aufweisen kann, dessen Formgebung mit der Formgebung des Fahrzeugkopfes 12 identisch sein kann.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen im Rahmen der Ansprüche können vom Fachmann hieraus abgeleitet werden, ohne den Schutzumfang der Erfindung zu verlassen.

## Patentansprüche

1. Schienenfahrzeug (10), mit einem mittleren Rumpfabschnitt (11) und einem sich daran anschließenden, im Fahrzeugbetrieb ein freies Fahrzeugende bildenden Fahrzeugkopf (12),
**dadurch gekennzeichnet, dass**
der Fahrzeugkopf (12) einen haubenartig überstehenden Dachbereich (13) aufweist, der einen darunter liegenden, nach innen in Richtung Fahrzeugmitte gewölbten Seitenwandbereich (14) des Fahrzeugkopfs (12) überwölbt,
der haubenartig überstehende Dachbereich (13) und der darunter liegende, nach innen gewölbte Seitenwandbereich (14) durch eine Kante getrennt sind, an der die Außenfläche des überstehenden Dachbereichs (13) und ein oberer Flächenabschnitt (141) des nach innen gewölbten Seitenwandbereichs (14) winklig aufeinander stehen, und
die Kante - in Fahrzeuglängsrichtung gesehen - ganz oder zumindest abschnittsweise für Seitenwind, insbesondere für Seitenwind mit einer Windanströmrichtung zwischen 10° bis 30° zur Fahrtrichtung, eine Strömungsabrisskante (20) auf der Leeseite bildet.

2. Schienenfahrzeug nach einem der voranstehenden Ansprüche,
**dadurch gekennzeichnet, dass**
der Winkel (γ) zwischen der Außenfläche des überstehenden Dachbereichs (13) und dem oberen Flächenabschnitt (141) des nach innen gewölbten Seitenwandbereichs (14) zwischen 70 und 110 Grad, bevorzugt zwischen 80 und 100 Grad, liegt.

3. Schienenfahrzeug nach einem der voranstehenden Ansprüche, **dadurch gekennzeichnet, dass**
- die Kante - in Fahrzeuglängsrichtung gesehen - abschnittsweise den am weitesten außen liegenden Seitenwandbereich bildet und/oder
- die Außenfläche des überstehenden Dachbereichs (13) und der obere Flächenabschnitt (141) des nach innen gewölbten Seitenwandbereichs (14) einen nach außen ausgerichteten Keil (30), insbesondere einen horizontal nach außen ausgerichteten Keil (30), bilden.

4. Schienenfahrzeug nach Anspruch 3,
**dadurch gekennzeichnet, dass**
- der Winkel (α) zwischen der oberen Keilfläche (31) des Keils (30) und der Vertikalen zwischen 30 und 60 Grad, bevorzugt zwischen 40 und 50 Grad, beträgt,
- der Winkel (β) zwischen der unteren Keilfläche (32) des Keils (30) und der Vertikalen zwischen 30 und 60 Grad, bevorzugt zwischen 40 und 50 Grad, beträgt und/oder
- die Keilmitte (33) bzw. Keillängsachse in einem Winkel zwischen ± 20 Grad zur Horizontalen ausgerichtet ist.

5. Schienenfahrzeug nach einem der voranstehenden Ansprüche,
**dadurch gekennzeichnet, dass**
der obere Flächenabschnitt (141) des nach innen gewölbten Seitenwandbereichs (14) oben scharfkantig an den überstehenden Dachbereich (13) und unten krümmungsstetig an eine Taille (142) angrenzt, die den am tiefsten innenliegenden Abschnitt des nach innen gewölbten Seitenwandbereichs (14) bildet.

6. Schienenfahrzeug nach einem der voranstehenden Ansprüche,
**dadurch gekennzeichnet, dass**
- der nach innen gewölbte Seitenwandbereich (14) einen unteren Flächenabschnitt (143) aufweist, der an einen unteren, konvexen Seitenwandbereich (16) angrenzt und
- der Übergang zwischen dem unteren Flächenabschnitt (143) und dem unteren, konvexen Seitenwandbereich (16) krümmungsstetig ist.

7. Schienenfahrzeug nach einem der voranstehenden Ansprüche,
**dadurch gekennzeichnet, dass**
- der untere, konvexe Seitenwandbereich (14) - in Fahrzeuglängsrichtung gesehen - bereichsweise weiter nach außen heraussteht als die Kante bzw. die Keilspitze und bereichsweise weniger weit nach außen heraussteht als die Kante bzw. die Keilspitze und
- die Kante bzw. die Keilspitze und der untere, konvexe Seitenwandbereich (16) - in vertikaler Richtung gesehen - durch die Taille (142) getrennt sind.

8. Schienenfahrzeug nach einem der voranstehenden Ansprüche,
**dadurch gekennzeichnet, dass**
der Rumpfabschnitt (11) und die Bugspitze (15) überstands- und taillenfrei sind.

9. Schienenfahrzeug nach einem der voranstehenden Ansprüche,
**dadurch gekennzeichnet, dass**
- die auf die Streckenoberfläche, insbesondere Schienenoberkante (SO) im Falle eines Schienenfahrzeugs (10), bezogene Höhe (H) des Fahrzeugkopfs (12) in Richtung Bugspitze (15) abnimmt,
- die auf die Streckenoberfläche, insbesondere Schienenoberkante (SO), bezogene Höhe (S) des haubenartig überstehenden Dachbereichs (13) bzw. des Keils (30) in Richtung Bugspitze (15) kleiner wird und
- die Ausprägung, insbesondere das seitliche Herausstehen, des haubenartig überstehenden Dachbereichs (13) bzw. des Keils (30) in Richtung Bugspitze (15) zunimmt und damit der aerodynamische Einfluss des überstehenden Dachbereichs (13) bzw. des Keils (30) hinsichtlich Seitenwind in Richtung Bugspitze (15) und damit auch vertikal nach unten verlagert wird und ein durch Seitenwind auf das Schienenfahrzeug ausgeübtes Kippmoment vornehmlich im vorderen Bugabschnitt (120) und damit gleichzeitig weit unten, insbesondere nah an der Schienenoberkante (SO) im Falle eines Schienenfahrzeugs (10), auftritt.

10. Schienenfahrzeug nach einem der voranstehenden Ansprüche, **dadurch gekennzeichnet, dass**
- der haubenartig überstehende Dachbereich (13) bzw. der Keil (30) - entlang der Fahrzeuglängsrichtung und in Richtung Bugspitze (15) gesehen - ausgeprägter wird,
- wobei - ausgehend vom mittleren Rumpfabschnitt (11) des Fahrzeugs in Richtung Bugspitze (15) - der untere, konvexe Seitenwandbereich (16) zunächst weiter nach außen heraussteht als die Kante bzw. die Keilspitze,
- wobei - im weiteren Verlauf nach vorn in Richtung Bugspitze (15), also in einem vorderen Bugabschnitt (120) - die Kante bzw. die Keilspitze den unteren, konvexen Seitenwandbereich (16) nach außen - in Fahrzeugquerrichtung - überragt und
- wobei vor der Bugspitze (15) die Ausprägung des haubenartig überstehenden Dachbereichs (13) wieder stetig abnimmt und flächenbündig in die Umgebungsfläche der überstandsfreien Bugspitze (15) übergeht.

11. Schienenfahrzeug nach Anspruch 10,
**dadurch gekennzeichnet, dass**
- die auf die Streckenoberfläche, insbesondere Schienenoberkante (SO) im Falle eines Schienenfahrzeugs (10), bezogene Höhe (H) des Fahrzeugkopfs (12) in Richtung Bugspitze (15) kleiner wird und
- der vordere Bugabschnitt (120), in dem die Kante bzw. die Keilspitze den unteren, konvexen Seitenwandbereich (16) nach außen in Fahrzeugquerrichtung überragt, in einem Bereich liegt, in dem die Höhe (H) des Fahrzeugkopfs (12) zwischen 20 % und 70 %, insbesondere zwischen 30 % und 60 %, der durch die Höhe (H) im mittleren Rumpfabschnitt (11) gebildeten Referenzhöhe (Hr) beträgt.

12. Schienenfahrzeug nach einem der voranstehenden Ansprüche,
**dadurch gekennzeichnet, dass**
von der Seite betrachtet der haubenartig überstehende Dachbereich (13) einen Hinterschnitt bildet und - in horizontaler Richtung bzw. Fahrzeugquerrichtung von der Seite betrachtet - einen dahinter innenliegenden Seitenwandabschnitt verdeckt.

13. Schienenfahrzeug nach Anspruch 12,
**dadurch gekennzeichnet, dass**
die Außenfläche des überstehenden Dachbereichs (13) und der obere Flächenabschnitt (141) des nach innen gewölbten Seitenwandbereichs (14) einen Keil (30) bilden, der sich nach außen sowie schräg nach unten erstreckt.

## Claims

1. Rail vehicle (10) having a central body portion (11) and a vehicle head (12), which adjoins the body portion and, when the vehicle is in operation, forms a free end of the vehicle,
**characterized in that**
the vehicle head (12) has a roof region (13), which provides a hood-like overhang and arches over a side-wall region (14) of the vehicle head (12), said side-wall region being located beneath the roof region and being curved inwards in the direction of the centre of the vehicle,
the roof region (13), which provides a hood-like overhang, and the inwardly curved side-wall region (14), which is located beneath the roof region, are separated by an edge at which the outer surface of the overhanging roof region (13) and an upper surface-area portion (141) of the inwardly curved side-wall region (14) meet at an angle in relation to one another, and - as seen in the longitudinal direction of the vehicle - the edge, in its entirety or at least in part, forms a separation edge (20) on the leeward side for crosswind, in particular for crosswind with a direction of airflow between 10° and 30° in relation to the direction of travel.

2. Rail vehicle according to the preceding claim,
**characterized in that**
the angle (γ) between the outer surface of the overhanging roof region (13) and the upper surface-area portion (141) of the inwardly curved side-wall region (14) is between 70 and 110 degrees, preferably between 80 and 100 degrees.

3. Rail vehicle according to either of the preceding claims,
**characterized in that**
- as seen in the longitudinal direction of the vehicle - the edge, at least in part, forms the furthest-outward side-wall region, and/or
- the outer surface of the overhanging roof region (13) and the upper surface-area portion (141) of the inwardly curved side-wall region (14) form an outwardly oriented wedge (30), in particular a horizontally outwardly oriented wedge (30).

4. Rail vehicle according to Claim 3,
**characterized in that**
- the angle (α) between the upper surface (31) of the wedge (30) and the vertical is between 30 and 60 degrees, preferably between 40 and 50 degrees,
- the angle (β) between the lower surface (32) of the wedge (30) and the vertical is between 30 and 60 degrees, preferably between 40 and 50 degrees, and/or
- the centre (33) of the wedge or the longitudinal axis of the wedge is oriented at an angle of between ± 20 degrees in relation to the horizontal.

5. Rail vehicle according to one of the preceding claims,
**characterized in that**
the upper surface-area portion (141) of the inwardly curved side-wall region (14) adjoins the overhanging roof region (13) by way of a sharp edge at the top and adjoins a narrowing (142) in a continuously curved manner at the bottom, said narrowing forming the furthest-inward portion of the inwardly curved side-wall region (14).

6. Rail vehicle according to one of the preceding claims,
**characterized in that**
- the inwardly curved side-wall region (14) has a lower surface-area portion (143), which is adjacent to a lower, convex side-wall region (16), and
- the transition between the lower surface-area portion (143) and the lower, convex side-wall region (16) is continuously curved.

7. Rail vehicle according to one of the preceding claims,
**characterized in that**
- as seen in the longitudinal direction of the vehicle - the lower, convex side-wall region (14), in some regions, projects further outwards than the edge or the tip of the wedge and, in some regions, projects outwards to a lesser extent than the edge or the tip of the wedge, and
- as seen in the vertical direction - the edge or the tip of the wedge and the lower, convex side-wall region (16) are separated by the narrowing (142).

8. Rail vehicle according to one of the preceding claims,
**characterized in that**
the body portion (11) and the tip (15) of the nose are free of projections and narrowings.

9. Rail vehicle according to one of the preceding claims,
**characterized in that**
- the height (H) of the vehicle head (12) as seen in relation to the carriageway surface, in particular, in the case of a rail vehicle (10), the upper edge (SO) of the rails, decreases in the direction of the tip (15) of the nose,
- the height (S) of the roof region (13), which provides a hood-like overhang, or of the wedge (30) as seen in relation to the carriageway surface, in particular the upper edge (SO) of the rails, becomes smaller in the direction of the tip (15) of the nose, and
- the extent to which the roof region (13), which provides a hood-like overhang, or the wedge (30) juts out, in particular projects laterally, increases in the direction of the tip (15) of the nose, and therefore the aerodynamic influence of the overhanging roof region (13) or of the wedge (30) in respect of crosswind is shifted in the direction of the tip (15) of the nose, and therefore also vertically downwards, and a tilting moment to which the rail vehicle is subjected by crosswind occurs predominantly in the front portion (120) of the nose and therefore, at the same time, far down, in particular, in the case of a rail vehicle (10), in the vicinity of the upper edge (SO) of the rails.

10. Rail vehicle according to one of the preceding claims,
**characterized in that**
- the roof region (13), which provides a hood-like overhang, or the wedge (30) juts out to a more pronounced extent as seen along the longitudinal direction of the vehicle and in the direction of the tip (15) of the nose,
- wherein - going from the central body portion (11) of the vehicle in the direction of the tip (15) of the nose - the lower, convex side-wall region (16) in the first instance projects further outwards than the edge or the tip of the wedge,
- wherein - continuing forwards in the direction of the tip (15) of the nose, that is to say in a front portion (120) of the nose - the edge or the tip of the wedge protrudes outwards - as seen in the transverse direction of the vehicle - beyond the lower, convex side-wall region (16), and
- wherein in front of the tip (15) of the nose, the extent to which the roof region (13), which provides a hood-like overhang, juts out decreases continuously again and merges in a surface-flush manner into the surrounding surface area of the overhang-free tip (15) of the nose.

11. Rail vehicle according to Claim 10,
**characterized in that**
- the height (H) of the vehicle head (12) as seen in relation to the carriageway surface, in particular, in the case of a rail vehicle (10), the upper edge (SO) of the rails, becomes smaller in the direction of the tip (15) of the nose, and
- the front portion (120) of the nose, in which the edge or the tip of the wedge protrudes outwards, as seen in the transverse direction of the vehicle, beyond the lower, convex side-wall region (16), is located in a region in which the height (H) of the vehicle head (12) is between 20% and 70%, in particular between 30% and 60%, of the reference height (Hr) formed by the height (H) in the central body portion (11).

12. Rail vehicle according to one of the preceding claims,
**characterized in that**
- as seen from the side - the roof region (13), which provides a hood-like overhang, forms an undercut and - as seen from the side in the horizontal direction or in the transverse direction of the vehicle - conceals an inner side-wall portion located behind the same.

13. Rail vehicle according to Claim 12,
**characterized in that**
the outer surface of the overhanging roof region (13) and the upper surface-area portion (141) of the inwardly curved side-wall region (14) form a wedge (30), which extends outwards and obliquely downwards.

## Revendications

1. Véhicule (10) ferroviaire, ayant une partie (11) de coque médiane et une tête (12) de véhicule s'y raccordant et formant, lorsque le véhicule est en fonctionnement, une extrémité libre du véhicule,
**caractérisé en ce que**
la tête (12) du véhicule a une région (13) formant toit en saillie à la manière d'une hotte, qui envoûte une région (14) formant paroi latérale, se trouvant en dessous et incurvée vers l'intérieur dans la direction du centre du véhicule, de la tête (12) de véhicule,
la région (13) formant toit en saillie à la manière d'une hotte et la région (14) formant paroi latérale se trouvant en dessous et incurvée vers l'intérieur sont séparées par un bord, où la surface extérieure de la région (13) formant toit en saillie et une région (141) supérieure de surface de la région (14) formant paroi latérale incurvée vers l'intérieur font un angle entre elles, et
le bord - considéré dans la direction longitudinale du véhicule - forme, du côté sous le vent, en tout ou au moins en partie pour du vent latéral, notamment pour du vent latéral soufflant dans une direction comprise entre 10° à 30° par rapport au sens de la marche, un bord (20) de détachement de courant.

2. Véhicule ferroviaire suivant l'une des revendications précédentes,
**caractérisé en ce que**
l'angle (γ) entre la surface extérieure de la région (13) formant toit en saillie et la région (14) formant paroi latérale incurvée vers l'intérieur est compris entre 70 et 110°, de préférence entre 80 et 100°.

3. Véhicule ferroviaire suivant l'une des revendications précédentes,
**caractérisé en ce que**
- le bord - considéré dans la direction longitudinale du véhicule - forme par endroit la région de paroi latérale la plus à l'extérieur et/ou
- la surface extérieure de la région (13) formant toit en saillie et de la partie (141) supérieure de surface de la région (14) de paroi latérale incurvée vers l'intérieur forme un coin (30) dirigé vers l'extérieur, notamment un coin (30) dirigé vers l'extérieur horizontalement.

4. Véhicule ferroviaire suivant la revendication 3,
**caractérisé en ce que**
- l'angle (α) entre la surface (31) supérieure du coin (30) et la verticale est compris entre 30 et 60°, de préférence entre 40 et 50°,
- l'angle (β) entre la surface (32) inférieure du coin (30) et la verticale est compris entre 30 et 60°, de préférence entre 40 et 50°, et/ou
- le milieu (33) du coin, ou l'axe longitudinal du coin, fait un angle compris entre ± 20 degrés avec l'horizontale.

5. Véhicule ferroviaire suivant l'une des revendications précédentes,
**caractérisé en ce que**
la partie (141) supérieure de surface de la région (14) formant paroi latérale incurvée vers l'intérieur est voisine, en haut à bord vif, de la région (13) formant toit en saillie et, en bas à courbure constante, d'une taille (142), qui forme la partie la plus profondément vers l'intérieur de la région (14) formant paroi latérale incurvée vers l'intérieur.

6. Véhicule ferroviaire suivant l'une des revendications précédentes,
**caractérisé en ce que**
- la région (14) formant paroi latérale incurvée vers l'intérieur a une partie (143) inférieure de surface, qui est voisine d'une région (16) inférieure convexe formant paroi latérale et
- la transition entre la partie (143) inférieure de surface et la région (16) inférieure convexe formant paroi latérale est à courbure constante.

7. Véhicule ferroviaire suivant l'une des revendications précédentes,
**caractérisé en ce que**
- la région (14) inférieure convexe formant paroi latérale - considéré dans la direction longitudinale du véhicule - est par endroit plus en saillie vers l'extérieur que le bord ou la pointe du coin et par endroit moins en saillie vers l'extérieur que le bord ou la pointe du coin, et
- le bord ou la pointe du coin et la région (16) inférieure convexe formant paroi latérale sont - considéré dans la direction verticale - séparés par la taille (142).

8. Véhicule ferroviaire suivant l'une des revendications précédentes,
**caractérisé en ce que**
la partie (11) de coque et la pointe (15) de proue sont sans porte-à-faux et sans taille.

9. Véhicule ferroviaire suivant l'une des revendications précédentes,
**caractérisé en ce que**
- la hauteur (H), rapportée à la surface de voie, notamment au bord (SO) supérieur de rail dans le cas d'un véhicule (10) ferroviaire, de la tête (12) du véhicule diminue dans la direction de la pointe (15) de la proue,
- la hauteur (S), rapportée à la surface de voie, notamment au bord (SO) supérieur de rail, de la région (13) formant toit en saillie en forme de hotte ou du coin (30) devient plus petite en direction de la pointe (15) de proue et l'estampage, notamment la saillie latérale de la région (13) formant toit en saillie à la manière d'une hotte ou du coin (30), augmente en direction de la pointe (15) de proue et ainsi l'influence aérodynamique de la région (13) formant toit en saillie ou du coin (30) en ce qui concerne le vent latéral est déplacée en direction de la pointe (15) de proue et ainsi également verticalement vers le bas et il se produit un couple de basculement appliqué au véhicule ferroviaire par le vent latéral, principalement dans la partie (120) avant de proue et ainsi en même temps loin vers le bas, notamment près du bord (50) supérieur de rail, dans le cas d'un véhicule (10) ferroviaire.

10. Véhicule ferroviaire suivant l'une des revendications précédentes,
**caractérisé en ce que**
- la région (13) formant toit en saillie à la manière d'une hotte ou le coin (30) - considéré suivant la direction longitudinale du véhicule et en la direction de la pointe (15) de proue - est estampée,
- dans lequel - en partant de la partie (11) moyenne de coque du véhicule dans la direction de la pointe (15) de proue - la région (16) inférieure convexe formant paroi latérale fait d'abord davantage saillie vers l'extérieur que le bord ou que la pointe du coin,
- dans lequel - dans la continuation de la courbe vers l'avant en direction de la pointe (15) de proue, donc dans une partie (120) antérieure de la proue - le bord ou la pointe du coin dépasse vers l'extérieur - dans la direction transversale du véhicule - la région (16) inférieure convexe formant paroi latérale et
- dans lequel, avant la pointe (15) de proue, l'estampage de la région (13) formant toit en saillie à la manière d'une hotte rediminue constamment et se transforme à affleurement de surface en la surface environnante de la pointe (15) de proue sans porte-à-faux.

11. Véhicule ferroviaire suivant la revendication 10, **caractérisé en ce que**
- la hauteur (H), rapportée à la surface de voie, notamment au bord (SO) supérieur de rail dans le cas d'un véhicule (10) ferroviaire, de la tête (12) du véhicule, devient plus petite en direction de la pointe (15) de proue et
- la partie (120) antérieure de proue, où le bord ou la pointe du coin dépasse dans la direction transversale du véhicule vers l'extérieur de la région (16) inférieure convexe formant paroi latérale, est dans une région où la hauteur (H) de la tête (12) du véhicule représente entre 20 et 70%, notamment entre 30 et 60%, de la hauteur (Hr) de référence formée par la hauteur (H) dans la partie (11) médiane de la coque.

12. Véhicule ferroviaire suivant l'une des revendications précédentes,
**caractérisé en ce que**
considéré par le côté, la région (13) formant toit en saillie à la manière d'une hotte forme une contre-dépouille et
- considéré par le côté dans la direction horizontale ou dans la direction transversale du véhicule - recouvre une partie de paroi latérale se trouvant à l'intérieur derrière.

13. Véhicule ferroviaire suivant la revendication 12,
**caractérisé en ce que**
la surface extérieure de la région (13) formant toit en saillie et la partie (141) supérieure de surface de la région (14) de paroi latérale incurvée vers l'intérieur forment un coin (30), qui s'étend vers l'extérieur et en étant incliné vers le bas.
